(19) Europäisches Patentamt
European Patent Office
Office européen des brevets

(11) EP 4 465 241 A1

(12) **EUROPEAN PATENT APPLICATION**

(43) Date of publication:
**20.11.2024 Bulletin 2024/47**

(21) Application number: **24169169.0**

(22) Date of filing: **09.04.2024**

(51) International Patent Classification (IPC):
**G06T 7/55** (2017.01) **G03B 13/36** (2021.01)
**H04N 23/67** (2023.01)

(52) Cooperative Patent Classification (CPC):
**G06T 7/55; G03B 13/36; H04N 23/67;**
G06T 2207/10028; G06T 2207/10148;
G06T 2207/20081; G06T 2207/20084

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **25.04.2023 JP 2023071694**

(71) Applicant: **CANON KABUSHIKI KAISHA
Tokyo 146-8501 (JP)**

(72) Inventor: **OGAWA, Shuhei
Tokyo, 146-8501 (JP)**

(74) Representative: **TBK
Bavariaring 4-6
80336 München (DE)**

(54) **IMAGE PROCESSING APPARATUS, IMAGE PROCESSING METHOD, AND COMPUTER PROGRAM**

(57)     An image processing apparatus (2, 13) is provided. The apparatus acquires (S301, S302, S303, S901) input data including a captured image and/or information relating to the captured image. The apparatus acquires (S305, S903) a feature of the input data by performing processing on the input data using a neural network. The apparatus generates (S306, S904) an integrated feature by integrating the feature and at least some of the input data. The apparatus generates (S307, S905) an estimation result of at least one of a defocus range and a depth range for a subject within the captured image, by performing processing on the integrated feature.

**FIG. 14**

START
ACQUIRE IMAGE — S301
ACQUIRE DEFOCUS MAP — S302
ACQUIRE SUBJECT REGION MAP — S303
ACQUIRE CORRECT ANSWER DATA — S1401
GENERATE FEATURE — S305
INTEGRATION PROCESSING — S306
POST-PROCESSING — S307
CALCULATE LOSS — S1402
UPDATE PARAMETER — S1403
SAVE PARAMETER — S1404
END

EP 4 465 241 A1

**Description**

BACKGROUND OF THE INVENTION

Field of the Invention

The present invention relates to an image processing apparatus, an image processing method, and a computer program, and particularly relates to focus control of an image capturing apparatus.

Description of the Related Art

Image processing is used for a variety of purposes. For example, Liu (W. Liu et al. "SSD: Single Shot MultiBox Detector", in ECCV 2016) discloses a method for detecting a subject region from an image, using a neural network.

On the other hand, image capturing apparatuses that perform focus adjustment so as to focus on a subject are known. For example, Japanese Patent Laid-Open No. 2022-137760 discloses a technology that involves adjusting the focus based on defocus amounts in a plurality of autofocus (AF) regions. Japanese Patent Laid-Open No. 2022-137760 discloses a technology for focusing on a main subject by eliminating the influence of obstructions that cross in front of the main subject. According to Japanese Patent Laid-Open No. 2022-137760, the region of an obstruction that crosses in front of the main subject is determined by utilizing statistical values of distance values that depend on subject distances detected for respective AF regions.

SUMMARY OF THE INVENTION

The present invention in its first aspect provides an image processing apparatus as specified in claims 1 to 16.

The present invention in its second aspect provides an image processing method as specified in claim 17.

The present invention in its third aspect provides a computer program as specified in claim 18.

Further features of the present invention will become apparent from the following description of exemplary embodiments (with reference to the attached drawings).

BRIEF DESCRIPTION OF THE DRAWINGS

FIG. 1 is a diagram showing an example hardware configuration of an image processing apparatus according to one embodiment.
FIG. 2 is a diagram showing an example functional configuration of an image processing apparatus according to one embodiment.
FIG. 3 is a flowchart of processing that is performed with an image processing method according to one embodiment.
FIG. 4 is a diagram illustrating an example of a method for generating a feature.
FIG. 5 is a flowchart showing an example of processing for generating an integrated feature.
FIG. 6 is a flowchart showing an example of processing for generating an integrated feature.
FIG. 7 is a diagram illustrating an example of processing performed on an integrated feature.
FIGS. 8A to 8D are diagrams illustrating an input image and a defocus map.
FIG. 9 is a flowchart of processing in an image processing method according to one embodiment.
FIG. 10 is a flowchart showing an example of processing for generating an integrated feature.
FIG. 11 is a diagram illustrating processing for generating an integrated feature.
FIGS. 12A and 12B are diagrams illustrating processing for generating an integrated feature.
FIG. 13 is a diagram showing an example functional configuration of a learning apparatus according to one embodiment.
FIG. 14 is a flowchart of processing that is performed with a learning method according to one embodiment.

DESCRIPTION OF THE EMBODIMENTS

Hereinafter, embodiments will be described in detail with reference to the appended drawings. Note that the following embodiments are not intended to limit the claims. Although a plurality of features are described in the embodiments, not all of these features are essential, and multiple features may also be suitably combined. Furthermore, in the appended drawings, the same reference numbers are given to configurations that are the same or similar, and redundant description thereof will be omitted.

In the case of focusing on a person's face, their arm or hand may obstruct their face. For example, when the person's arm obstructs their face, the face region included in the field of view from the image capturing apparatus includes a region in which the face does not exist (i.e., the region of the arm that obstructs the face). In this case, the focus detection result of the face region changes continuously from the face to the arm. In such a situation, it is difficult to suppress the influence of the arm and focus on the face even with a technology that uses statistical values of distance values such as Japanese Patent Laid-Open No. 2022-137760. Also, for example, in cases such as where shooting is performed in a low-light environment, or where the subject is low contrast, or where the f-stop value of the photographic optical system is large, there tends to be a large variation in the focus detection result. In this case, the distance value detected for each region may possibly be accompanied by a relatively large error that follows a predetermined distribution such as a normal distribution. In such a case, it is difficult to suppress the influence of the error with a method that uses statistical values of distance values such as Japanese Patent Laid-Open No. 2022-137760.

We have studied a method for accurately performing focus adjustment using a neural network. Typically, in processing using a neural network, feature extraction is performed in an earlier layer and result output is performed in a subsequent layer. We tried to estimate the defocus amount of a subject (e.g., person's face) from a defocus map showing the defocus amounts of respective positions in an image using a neural network. However, further improvement in estimation accuracy was still needed. At the same time, also in other processing that uses a neural network, there are cases where further improvement of estimation accuracy is required.

One embodiment of the present disclosure improves the accuracy of processing performed on input data relating to an image.

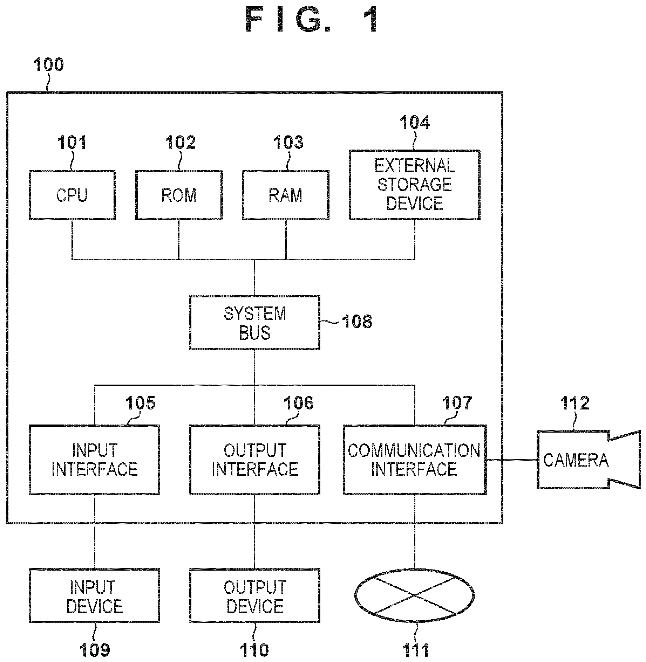

The image processing apparatus according to one embodiment of the present disclosure can be realized by a computer or an information processing apparatus provided with a processor and a memory. FIG. 1 is a block diagram showing an example hardware configuration of an information processing apparatus that can be used as an image processing apparatus according to each embodiment described later. The image processing apparatus according to each embodiment may be realized by a single information processing apparatus. On the other hand, the various functions of the information processing apparatus described later may be distributed to a plurality of information processing apparatuses as necessary. In the case where the image processing apparatus is constituted by a plurality of information processing apparatuses, the individual information processing apparatuses are connected so as to be able to communicate with each other. Connection can be achieved using a Local Area Network (LAN), for example.

In the example in FIG. 1, an information processing apparatus 100 is connected to an input device 109, an output device 110, the Internet 111, and a camera 112. There is no particular limitation on the connection method. For example, at least some of these devices may be connected by cable. Also, at least some of these devices may be connected via wireless communication. Also, the input device 109 or the output device 110 may be an independent device separate from the information processing apparatus 100. Conversely, the input device 109 or the output device 110 may be integrally incorporated into the information processing apparatus 100.

The information processing apparatus 100 is able to perform processing according to each embodiment. The input device 109 is a device that accepts user inputs to the information processing apparatus 100. The input device may be, for example, a pointing device or a keyboard. The output device 110 is a device capable of outputting images and characters. The output device 110 is, for example, a monitor. The output device 110 is able to display data held by the information processing apparatus 100, data input by the user, or the execution results of programs.

The camera 112 is an image capturing apparatus that is able to acquire captured images. The camera 112 is able to acquire a continuous captured image by, for example, capturing images at a predetermined interval $\Delta t$. The camera 112 is able to input captured images thus acquired to a data acquisition unit 201 described later. There is no particular limitation on the number of cameras 112. For example, one camera 112 or a plurality of cameras 112 may be connected to the information processing apparatus 100.

A CPU 101 is a central processing unit that performs overall control of the information processing apparatus 100. The CPU 101 is able to execute processing according to each embodiment and control operations of the information processing apparatus 100, by executing various software (computer programs) stored in an external storage device 104, for example.

The ROM 102 is a read-only memory. The ROM 102 is able to store programs and parameters that do not need to be changed. The RAM 103 is a random-access memory. The RAM 103 is able to temporarily store programs or data that are supplied from an external device or the like. The external storage device 104 is an external storage device that is readable by the information processing apparatus 100. The external storage device 104 is able to store programs and data long term. The external storage device 104 may be, for example, a hard disk or a memory card fixedly installed in the information processing apparatus 100. Also, the external storage device 104 may be an optical disk such as a flexible disk (FD) or a compact disc (CD), a magnetic card, an optical card, an IC card, a memory card or the like that is removable from the information processing apparatus 100.

An input interface 105 is an interface with the input device 109. An output interface 106 is an interface with the output device 110. A communication interface 107 is an interface that is used for connecting to another device. The information processing apparatus 100 is able to connect to the Internet 111 or the camera 112, via the communication interface 107. The camera 112 may also be connected to the information processing apparatus 100 via the Internet 111. A system 108 connects the abovementioned units such that they can communicate with each other.

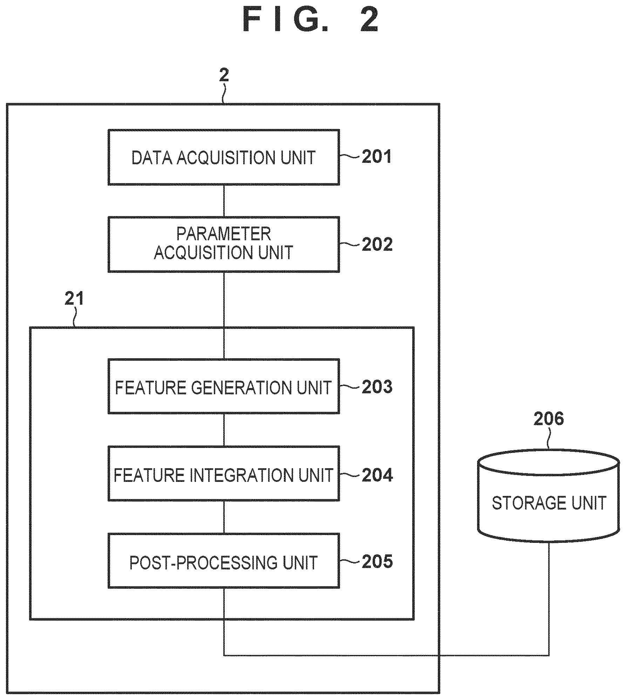

In this way, a processor such as the CPU 101 is able to realize the functions of the various units shown in FIG. 2 and the like described later, by executing programs stored in a memory such as the ROM 102, the RAM 103, or the external storage device 104. For example, programs for realizing the functions of the various units that are stored in the external storage device 104 are read out to the RAM 103. The functions of the various units are then realized by the CPU 101 operating in accordance with the programs on the RAM 103. The device storing the programs and respective setting data sets at this time is not limited to the external storage device 104. For example, the information processing apparatus 100 may acquire the programs and setting data sets from another device such as a server via a network such as the Internet 111.

FIG. 2 is a block diagram showing an example functional configuration of the information processing apparatus 100. The information processing apparatus 100 includes the data acquisition unit 201, a parameter acquisition unit 202, and an inference unit 21. Also, the functional units are each connected to a storage unit 206. On the other hand, the information processing apparatus 100 may include the storage unit 206. Hereinafter, these functional units will be described.

The following description focuses on the case where the information processing apparatus 100 performs the task of inferring the defocus range of a subject in an image. The defocus range of a subject is represented by maximum and minimum values of the defocus amount in a region corresponding to a specific subject in the image. There is no particular limitation on the category of the subject. The subject can be any of a variety of objects, such as a person, an animal (e.g., dog or cat), or a vehicle (e.g., car or train). On the other hand, the subject may be a part of an object such as a face or eyes, for example. Hereinafter, the case of detecting a person will be described. Nevertheless, as will be described later, the processing that is performed by the information processing apparatus 100 according to the present embodiment is not limited to processing for inferring the defocus range. Note that, herein, the defocus amount indicates how far off the focus is from the focal plane.

The data acquisition unit 201 acquires input data. In the present embodiment, this input data is input data including an image and/or information relating to the image. In the following example, the data acquisition unit 201 acquires a captured image of a subject. The captured image may be an image obtained by capturing an image of a subject using the camera 112.

In the present embodiment, the data acquisition unit 201 acquires a defocus map in addition to the captured image. A defocus map is a map that spreads out in spatial directions, and shows the defocus amount for respective positions (e.g., respective regions) in the captured image. The defocus map can be generated based on the defocus amounts calculated for respective regions of the image. The data acquisition unit 201 is able to obtain such a defocus map from the camera 112. There is no particular limitation on the method of generating the defocus map. For example, the camera 112 having an image plane phase difference AF function is able to generate such a defocus map based on the defocus amounts at respective ranging points. The defocus map can be generated in accordance with a method described in Japanese Patent Laid-Open No. 2019-134431, for example.

In the present embodiment, the data acquisition unit 201 further acquires a subject region map showing the region in which the subject is located within the captured image. The subject region map is able to show the position and size of the subject. The data acquisition unit 201 is able to generate the subject region map based on a position input. For example, the user is able to designate the subject region, by touching the subject on an image displayed on the output device 110. In this case, the data acquisition unit 201 is able to acquire information designating the subject region from the input device 109. Also, the data acquisition unit 201 may determine the region of the subject, using a method for automatically detecting a subject in an image. For example, the data acquisition unit 201 is able to detect a main subject or the like in an image, using a method described in Japanese Patent Laid-Open No. 2017-98900. Also, the data acquisition unit 201 may determine the region of the subject, based on both region designation and object detection processing. For example, the data acquisition unit 201 is able to use the region of an object detected from the designated region as the region of a subject. The data acquisition unit 201 is able to detect an object from the image, using a method described in Liu, for example.

The data acquisition unit 201 is then able to generate a subject region map, based on information indicating the subject region in the image thus obtained. In the following example, the subject region in the image is represented by a bounding box (hereinafter abbreviated as BB). Note that, in the present embodiment, use of a subject region map is not mandatory. That is, the information processing apparatus 100 may estimate the defocus range for a subject located in an arbitrary place within the captured image.

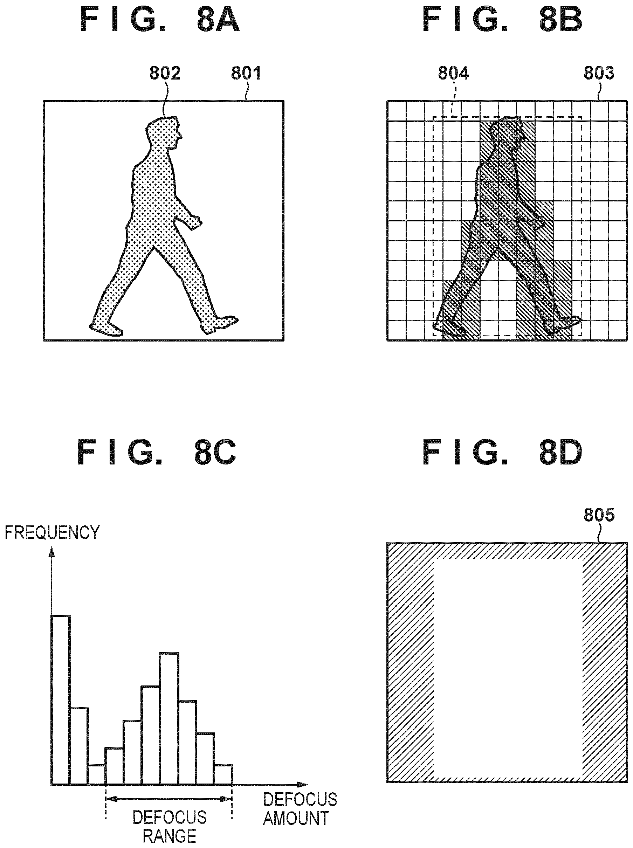

FIG. 8A shows an example of an image 801 that is acquired by the data acquisition unit 201. The image 801 is an image captured by the camera 112. A person 802 who is the subject appears in the image 801. In FIG. 8B, a defocus map 803 and a BB 804 of the subject are superimposed on the image 801. FIG. 8D shows a subject region map 805. The subject region map 805 is generated based on the BB 804. The subject region map 805 is a two-dimensional map. In the subject region map 805, a value greater than 0 (e.g., 1) is recorded for pixels in the region inside the BB 804, and 0 is recorded for the other pixels.

Meanwhile, a background also appears in the BB 804 of the image 801, in addition to the subject. Also, an obstacle that hides a part of the subject may appear within the BB 804 of the image 801. According to the present embodiment, the defocus range for the subject of a specific category that appears in the BB 804 is estimated. For example, the defocus range can be estimated for a portion of the BB 804 in which a person's face appears, which is not a portion of a background or a portion in which an obstacle appears.

The parameter acquisition unit 202 acquires a parameter relating to processing that is performed by a feature generation unit 203 and a post-processing unit 205. The parameter acquisition unit 202 is able to acquire a parameter relating to a neural network that is used by the feature generation unit 203 and the post-processing unit 205. The parameter acquisition unit 202 is able to acquire the parameter from the storage unit 206. This parameter is determined by learning as described later.

The inference unit 21 infers the defocus range of the subject based on input data. The inference unit 21 includes the feature generation unit 203, a feature integration unit 204, and the post-processing unit 205.

The feature generation unit 203 generates a feature of input data relating to the image acquired by the data acquisition unit 201, based on the input data. In the present embodiment, the feature generation unit 203 generates a feature, using the image 801, the defocus map 803, and the subject region map 805. The feature generation unit 203 is able to generate features, using a neural network such as Convolutional Neural Network (hereinafter abbreviated as CNN), for example.

The feature integration unit 204 generates an integrated feature, by integrating at least some of the input data acquired by the data acquisition unit 201 and the feature generated by the feature generation unit 203. In the present embodiment, the feature integration unit 204 integrates the feature generated by the feature generation unit 203 and the defocus map acquired by the data acquisition unit 201.

The post-processing unit 205 generates a processing result corresponding to the input data acquired by the data acquisition unit 201, by performing processing on the integrated feature generated by the feature integration unit 204. In the present embodiment, the post-processing unit 205 outputs information indicating the defocus range of the subject, based on the feature generated by the feature integration unit 204. FIG. 8C shows a histogram of the defocus amount within the BB 804. FIG. 8C shows the defocus range estimated by the post-processing unit 205. In the embodiment described below, the post-processing unit 205 outputs the maximum and minimum values of the defocus range. However, the output of the post-processing unit 205 is not limited to this format. For example, the post-processing unit 205 may output a defocus amount for each position in which the subject appears in the BB 804.

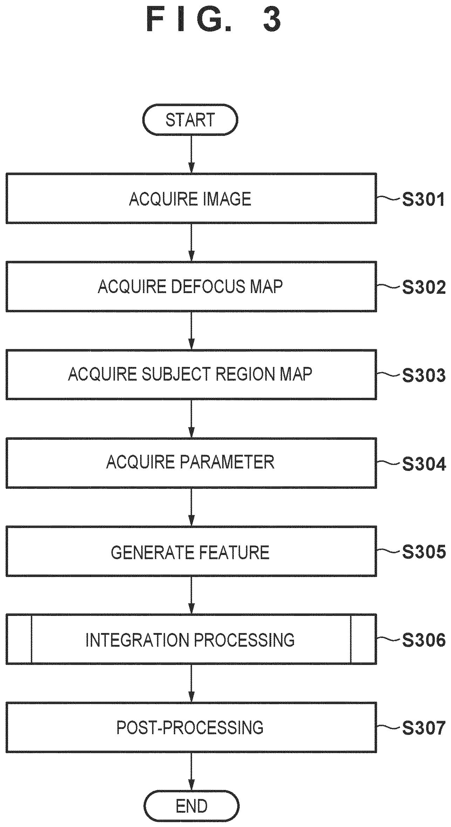

FIG. 3 is a flowchart showing a processing flow of an image processing method that is performed by the information processing apparatus 100 in the present embodiment. Hereinafter, each process (step) will be represented by a reference numeral starting with S, and the term "process (step)" will be omitted. The information processing apparatus 100 may, however, not perform all of the processing shown in this flowchart. The respective processing can be executed by the CPU 101 as described above.

In S301, the data acquisition unit 201 acquires a captured image of a subject as described above. In S302, the data acquisition unit 201 acquires a defocus map as described above. In S303, the data acquisition unit 201 acquires a subject region map as described above. The data acquisition unit 201 may acquire these data from the camera 112 connected to the information processing apparatus 100. Also, the data acquisition unit 201 may acquire data that is held in the external storage device 104.

In S304, the parameter acquisition unit 202 acquires a parameter relating to processing as described above. For example, the parameter acquisition unit 202 is able to acquire a parameter that is used in computation in convolutional layers (Convolution) and fully-connected layers (Fully-Connected).

In S305, the feature generation unit 203 generates a feature using the input data acquired in S301 to S303. The feature generation unit 203 is able to generate features using a CNN, for example. The feature generation unit 203 may generate features using a multilayer perceptron. The feature generation unit 203 may also generate features using multi-head self-attention. In this way, the processing that is used by the feature generation unit 203 in order to generate features is not limited to a specific method.

On the other hand, in one embodiment, the processing performed on the input data by the feature generation unit 203 in order to generate features includes nonlinear operations such as activation processing. For example, the processing that is performed on the input data by the feature generation unit 203 may be processing in a neural network that includes activation layers.

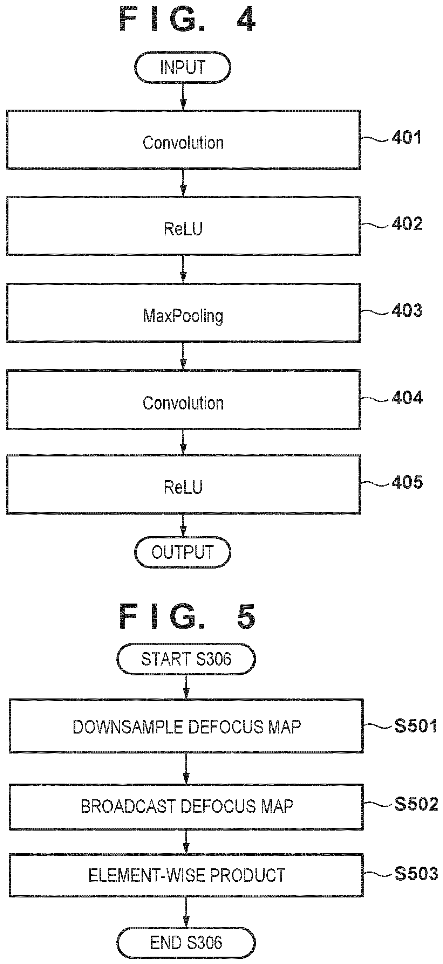

In the present embodiment, the feature generation unit 203 inputs a captured image, a defocus map, and a subject region map to the CNN. The feature generation unit 203 then acquires the output from the CNN as a feature by performing computations in the CNN. FIG. 4 shows an example of a CNN configuration. The CNN shown in FIG. 4 has convolutional layers (Convolution 401, 404) that perform convolutional operations, activation layers (ReLu 402, 405) that apply an activation function, and a pooling layer (MaxPooling 403) that performs pooling processing. Nevertheless, there is no particular limitation on the configuration of the CNN, that is, the number of layers and the connection between the layers.

The feature generation unit 203 is able to perform processing for aligning the resolutions of the captured image, the defocus map, and the subject region map before inputting the image and maps to the CNN. For example, the feature generation unit 203 is able to perform downsampling or upsampling. As an example, the feature generation unit 203 is able to upsample the resolution of the defocus map so as to match the resolution of the captured image. At this time, the feature generation unit 203 is able to input a captured image, a defocus map, and a subject region map having the same number of elements in the vertical and horizontal directions to the CNN as data of a plurality of channels.

In S306, the feature integration unit 204 generates an integrated feature as described above. In the present embodiment, the feature integration unit 204 integrates the defocus map acquired by the data acquisition unit 201 and the feature generated by the feature generation unit 203.

FIG. 5 is a flowchart showing an example of the processing in S306. In S501 and S502, the feature integration unit 204 performs processing for matching the number of elements of the data to be integrated. For example, the feature integration unit 204 is able to perform at least one of processing for matching the spatial resolution and processing for matching the number of channels between the feature and at least some of the input data.

First, in S501, the feature integration unit 204 performs processing for aligning the spatial resolutions (e.g., vertical and horizontal resolutions) of the data to be integrated. With such processing, the number of elements in the spatial directions of the data to be integrated can be aligned.

In the present embodiment, the feature integration unit 204 performs downsampling on the defocus map so as to match the resolution of the feature. There is no particular limitation on the method of downsampling. For example, the feature integration unit 204 is able to perform downsampling using the nearest neighbor method. Note that the feature integration unit 204 may upsample the feature instead of downsampling the defocus map. Also, the feature integration unit 204 may use a combination of downsampling and upsampling.

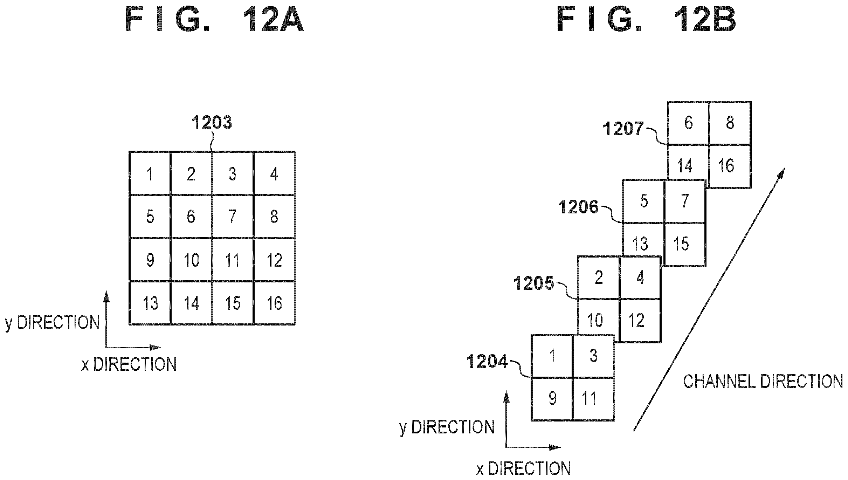

As an example, the feature integration unit 204 may perform downsampling using a combination of rearrangement of elements and convolution processing. An example of a method for rearranging elements will be described, with reference to FIGS. 12A and 12B. FIG. 12A shows a defocus map 1203 before downsampling. The feature integration unit 204 is able to obtain maps 1204 to 1207 shown in FIG. 12B, by rearranging the elements of the defocus map 1203. Maps 1204 to 1207 are arranged so as to spread out in the channel direction. Due to the rearranging, the spatial resolution of the maps 1204 to 1207 is lower compared to the defocus map 1203. In the case where the elements are rearranged such that the resolution in the spatial directions (x, y directions) is reduced by half horizontally and vertically, the elements can spread out four-fold in the channel direction. The feature integration unit 204 is further able to perform convolution processing on the maps 1204 to 1207 thus obtained. For example, the feature integration unit 204 is able to generate a one-channel map from the maps 1204 to 1207 by performing convolution processing using a $1 \times 1$ filter.

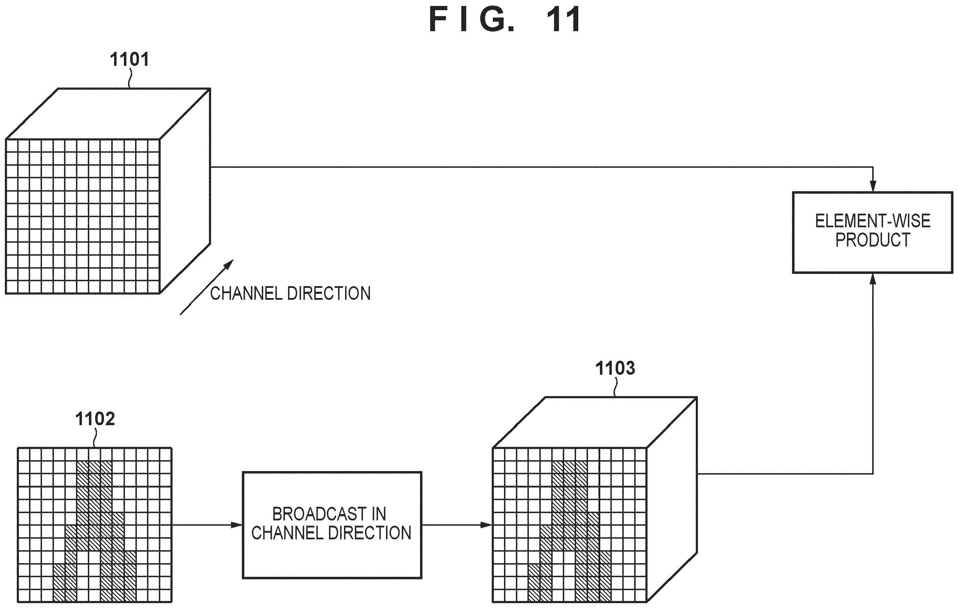

Next, in S503, the feature integration unit 204 performs processing for matching the number of elements in the channel direction of the data to be integrated. An example of the processing of S503 will be described, with reference to FIG. 11. The feature integration unit 204 is able to broadcast a defocus map 1102 obtained after the processing in S501 in the channel direction. Specifically, the feature integration unit 204 is able to generate a defocus map 1103 having data of a plurality of channels, by copying the defocus map 1102 in the channel direction. The data of each channel of the defocus map 1103 corresponds to the defocus map 1102. The feature integration unit 204 is thus able to match the dimension of the channel direction of the feature 1101 and the dimension of the channel direction of the defocus map 1103.

Finally, in S504, the feature integration unit 204 integrates the defocus map and the feature obtained after the processing in S503. In the example in FIG. 11, the feature integration unit 204 is able to integrate the feature 1101 and the defocus map 1103. In the present embodiment, the feature integration unit 204 performs integration by calculating an element-wise product of the feature 1101 and the defocus map 1103. That is, the value of the element of the integrated feature obtained in S504 is the product of the corresponding element of the feature 1101 and the corresponding element of the defocus map 1103.

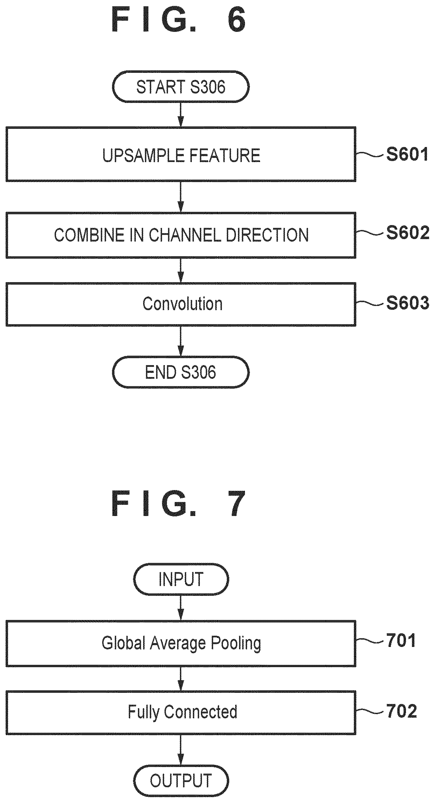

As another example of the processing in S306, the feature integration unit 204 may perform processing for combining the feature and at least some of the input data in the channel direction. Also, the feature integration unit 204 may perform a product-sum operation on the data obtained by the combining. FIG. 6 is a flowchart showing another example of the processing in S306. In S601, the feature integration unit 204 performs processing for aligning the resolutions in the vertical and horizontal directions of the data to be integrated. In the present embodiment, the feature integration unit 204 performs upsampling on the feature obtained in S305, so as to match the resolution of the defocus map. Next, in S602, the feature integration unit 204 combines the defocus map obtained in S302 and the feature obtained after processing in S601 in the channel direction. Finally, in S603, the feature integration unit 204 generates an integrated feature, by performing a convolution operation on the data obtained by the combining in S602. For example, the feature integration unit 204 is able to perform convolution processing (i.e., weighted addition in the channel direction) using a $1 \times 1$ filter.

Note that the feature integration unit 204 may perform noise reduction processing on the defocus map. The feature integration unit 204 may then integrate the defocus map that has undergone noise reduction processing with the feature generated by the feature generation unit 203. There is no particular limitation on the method of noise reduction processing. For example, noise reduction processing can be performed using a filter such as a median filter or a Gaussian filter. Also, noise reduction processing can be performed using a neural network. In this way, the accuracy of the defocus range estimation result that is obtained by the post-processing unit 205 can be improved, by performing noise reduction processing on the defocus map.

Also, the feature integration unit 204 may perform high-resolution processing on the defocus map. The feature integration unit 204 may then integrate the defocus map that has undergone the high-resolution processing with the feature generated by the feature generation unit 203. Examples of high-resolution processing include super-resolution processing as described in Yang (W. Yang et al. "Deep Learning for Single Image Super-Resolution: A Brief Review", arXiv: 1808.03344, 2018). In this way, the accuracy of the defocus range estimation result can be improved in detail, by performing high-resolution processing on the defocus map.

Next, in S307, the post-processing unit 205 generates a processing result, by performing processing on the integrated feature obtained in S306. In the present embodiment, the post-processing unit 205 outputs the defocus range of the subject by performing processing on the integrated feature. In the present embodiment, the processing that is performed on the integrated feature by the post-processing unit 205 is a linear operation. Also, in the present embodiment, nonlinear processing is not included in the processing that is performed on the integrated feature by the post-processing unit 205. In the following example, the processing by which the post-processing unit 205 generates a processing result includes the processing of the fully-connected layers. Also, the processing by which the post-processing unit 205 generates a processing result includes pooling processing.

FIG. 7 shows an example of the processing that is performed by the post-processing unit 205 in S307. First, the post-processing unit 205 performs pooling processing on the integrated feature (Global Average Pooling 701). Furthermore, the post-processing unit 205 performs the processing of the fully-connected layer on the result of the pooling processing (Fully Connected 702). Due to the above processing, the defocus range of the subject (i.e., maximum value $Def_{max}$ and minimum value $Def_{min}$ of defocus amount) is output. Note that the processing that is performed by the post-processing unit 205 is not limited to a specific method. For example, the post-processing unit 205 may perform a plurality of iterations of the processing of the fully-connected layer. In one embodiment, the computational amount of processing that is performed on the integrated feature by the post-processing unit 205 is less than the computational amount of processing that is performed on the input data by the feature generation unit 203. This computational amount can be the computational time or the number of product operations.

The result output by the post-processing unit 205 in this way can be used in order to perform focus control of the image capturing apparatus (e.g., camera 112). For example, the maximum value $Def_{max}$ and minimum value $Def_{min}$ of the defocus amount are obtained according to a method performed in accordance with FIG. 3. Based on the results obtained in this way, the CPU 101 is able to control the optical system of the camera 112 via the communication interface 107. For example, the output device 110 is able to control the focus operation of the camera 112, such that the focus position of the camera 112 is included in the range of $Def_{max}$ and $Def_{min}$. The CPU 101 may acquire information indicating a focus position determined by the user between $Def_{max}$ and $Def_{min}$ via the input interface 105. The CPU 101 is then able to control the focus operation of the camera 112 according to the designated focus position. In this case, the CPU 101 is able to restrict the user input, such that the focus position designated by the user is between $Def_{max}$ and $Def_{min}$.

According to the present embodiment, the defocus amount of the main subject can be accurately inferred. That is, the defocus amount for the subject can be estimated, even if the subject region shown by the subject region map includes a background or obstruction apart from the subject. In this way, according to the present embodiment, the influence of obstructions or focus detection errors can be reduced, in the case where focus control is performed such that the main subject is in focus. Accordingly, it becomes easier to keep the main subject in focus.

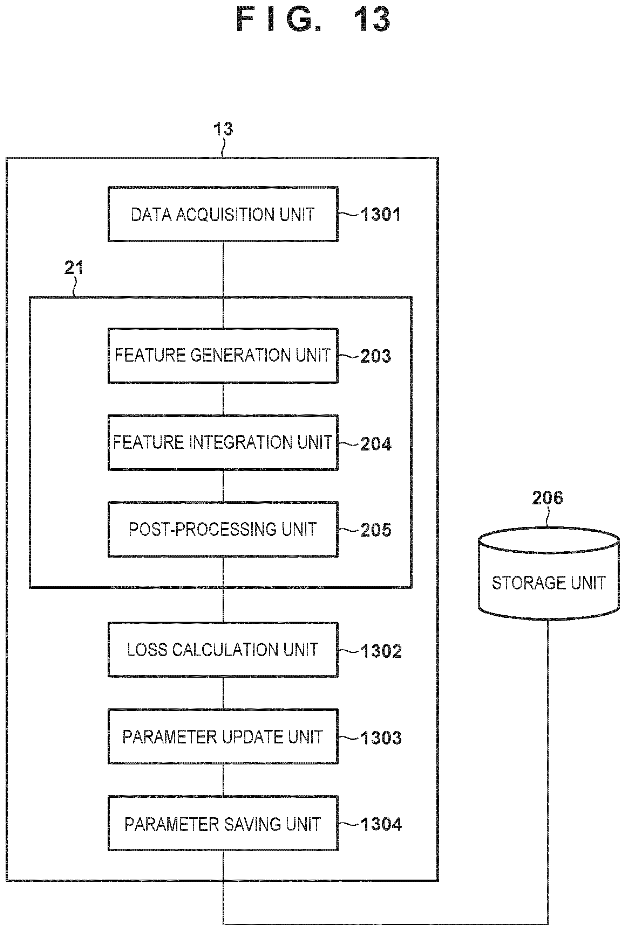

Next, a method for learning a parameter relating to processing that is performed by the information processing apparatus 100 in order to estimate the defocus range of the subject (e.g., processing performed by the feature generation unit 203 and the post-processing unit 205) will be described. FIG. 13 shows an example functional configuration of a learning apparatus 13 that performs the learning method according to the present embodiment. The function of the learning apparatus 13 can be realized by a processor executing a program stored in memory. The learning apparatus 13 may have a hardware configuration similar to the information processing apparatus 100 shown in FIG. 1.

A data acquisition unit 1301 acquires input data for learning. The input data for learning includes a captured image for learning, a defocus map, and a subject region map. The data acquisition unit 1301 further acquires correct answer data for the defocus range that corresponds to the set of the learning captured image, defocus map, and subject region map.

Note that the captured image for learning, the defocus map, and the subject region map can be acquired as already described. The correct answer data for the defocus range may be generated based on user inputs. Also, this correct answer data may be generated based on the defocus amount detected by an image capturing apparatus such as the camera 112.

For example, the camera 112 is able to calculate the defocus amount for each focus detection region, based on a focus detection signal acquired at the same timing as the image capturing of the subject. Computation of the defocus amount may be performed by an external computational device such as a personal computer based on the focus detection signal and image signal recorded by the image capturing apparatus.

Then, a range of defocus amounts suitable as the defocus amount of the subject can be used as correct answer data, in view of the defocus amounts of the subject region within the captured image and a background of the subject or an obstacle which is the foreground of the subject. For example, the correct answer data can be determined, by excluding the range of the defocus amount for a background and the range of the defocus amount for an obstacle from the range of the defocus amount for the subject region. Determination of the correct answer data for such a defocus range can be performed while the user visually confirms the captured image and the defocus amount. As a different method, the captured image can be divided by segmentation processing. Also, a defocus amount calculated for a focus detection region that overlaps with a partial region of the subject that does not include a background or an obstacle in the foreground can be determined as the correct defocus amount for the partial region of the subject. The correct answer data can then be determined, based on these correct defocus amount determined for each partial region of the subject.

The inference unit 21 infers the defocus range of the subject based on the input data for learning, similarly to the information processing apparatus 100. The inference unit 21 includes a feature generation unit 203, a feature integration unit 204, and a post-processing unit 205, similarly to the information processing apparatus 100.

A loss calculation unit 1302 determines the error of the defocus range estimation result generated by the inference unit 21. For example, the data acquisition unit 1301 calculates the loss, by comparing the defocus range generated by the inference unit 21 with the correct answer data for the defocus range acquired by the data acquisition unit 1301.

A parameter update unit 1303 updates the parameter that is used in processing by the inference unit 21 (e.g., parameter used in processing by the feature generation unit 203 and the post-processing unit 205) based on the loss calculated by the loss calculation unit 1302. Learning of a parameter is thus performed. A parameter saving unit 1304 saves the parameter obtained by learning for use in processing by the inference unit 21 to the storage unit 206. This parameter is used for processing by the information processing apparatus 100 (e.g., the feature generation unit 203 and the post-processing unit 205).

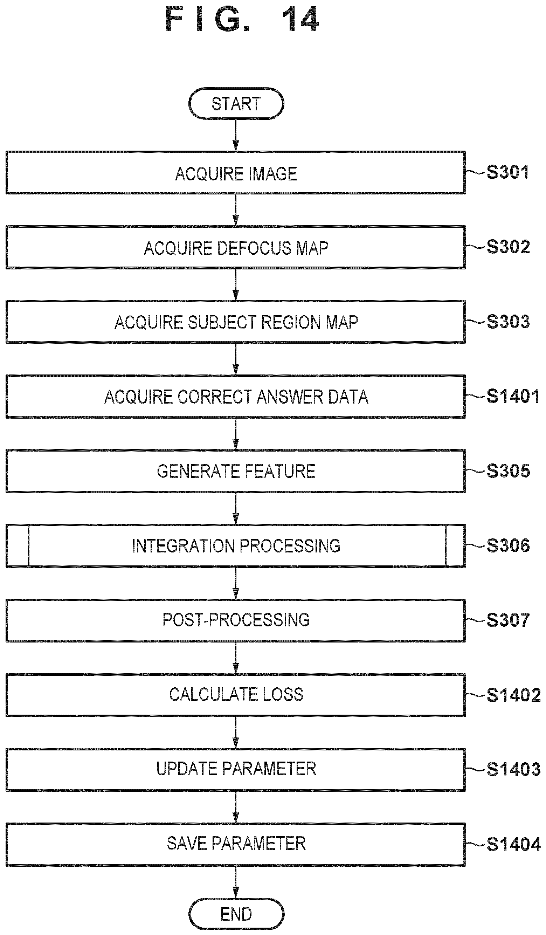

FIG. 14 shows an example of a flowchart of the learning processing according to the present embodiment. S301 to S303 are similar to FIG. 3. In this example, in S301 to S303, the data acquisition unit 1301 acquires input data for learning. In S1401, the data acquisition unit 1301 acquires correct answer data for the defocus range as described above. S305 to S307 are similar to FIG. 3. In this example, a defocus range inference result for the input data for learning is generated.

In S 1402, the loss calculation unit 1302 calculates the loss between the correct answer data of the defocus range acquired in S 1401 and the defocus range inference result obtained in S307. The loss can be represented by, for example, a L1 norm according to the following equation.

$$\text{Loss} = \left| D_{GT}^{max} - D_{inf}^{max} \right| + \left| D_{GT}^{min} - D_{inf}^{min} \right|$$

$D_{GT}^{max}$ is the maximum value of the defocus range indicated by the correct answer data. $D_{inf}^{max}$ is the maximum value of the defocus range indicated by the inference result. $D_{GT}^{min}$ is the minimum value of the defocus range indicated by the correct answer data. $D_{inf}^{min}$ is the minimum value of the defocus range indicated by the inference result.

In S1403, the parameter update unit 1303 updates the parameter, based on the loss calculated in S1402. The parameter that is updated here is, for example, the weight of the elements in the neural network. For example, the parameter that is updated can be the weighting factor of convolutional layers (Convolution). Also, the parameter that is updated can be the weighting factor of fully-connected layers (Fully-Connected). There is no particular limitation on the parameter update method. For example, the parameter update unit 1303 is able to update the parameter using back propagation that is based on Momentum SGD.

In S1404, the parameter saving unit 1304 saves the parameter updated in S1403. In the learning processing, the method shown in FIG. 14 can be performed repeatedly using various input data for learning.

In the above embodiment, estimation of the defocus range for one type of subject in an image is performed. However, the subject is not limited to one type. For example, estimation of the defocus range for each of two or more types of subjects may be performed. As a specific example, the information processing apparatus 100 may estimate the defocus range for a whole person, the defocus range for the pupil region of the person, and the defocus range for the head region of the person in a captured image.

Also, in another embodiment, the information processing apparatus 100 may infer a depth range of the subject instead of the defocus range. The depth range is able to represent the range of distances from the image capturing apparatus to respective positions of the subject. Also, the data acquisition unit 201 may acquire a depth map instead of a defocus map. The depth map is able to represent a depth value for each position in the captured image (e.g., distance from the image capturing apparatus to the subject corresponding to each position in the captured image). In this way, the input data that is acquired by the data acquisition unit 201 may include at least one of a defocus map and a depth map. Also, in this case, at least one of the defocus map and the depth map is used to generate the integrated feature. Also, the post-processing unit 205 is able to output the estimation result of at least one of the defocus range and the depth range of the subject.

In the above embodiment, the feature integration unit 204 generates an integrated feature, by integrating the feature generated by the feature generation unit 203 and the defocus map. At this time, the feature integration unit 204 is able to perform integration without converting the size of the value or the unit of the value shown by the defocus map. The post-processing unit 205 then infers the defocus range based on the integrated feature. According to such a configuration, even if the processing that is performed by the feature generation unit 203 includes processing that tends to change the value such as a nonlinear operation, the value of the defocus map is likely to be maintained in the processing by the post-processing unit 205. For example, the integrated feature that is used by the post-processing unit 205 can better reflect the value of the defocus map. Thus, the inference accuracy of the defocus range of the subject is improved. According to the present embodiment, the inference accuracy of the defocus range can be improved, by integrating the defocus map with the feature generated by the feature generation unit 203. In particular, the inference accuracy of the defocus range can be improved for captured images in which the subject is out of focus.

In this way, in the present embodiment, the feature of the input data obtained by performing processing on the input data and at least some of the input data (e.g., defocus map) are integrated. Such features obtained by performing processing on input data often do not directly indicate the respective values of the input data (e.g., defocus map). On the other hand, the integrated feature thus obtained better reflects the values (especially absolute values) of at least some of the input data (e.g., defocus map) more than the feature obtained by performing processing on the input data. Accordingly, with the present embodiment, the inference accuracy that is based on processing performed on the integrated feature can be improved. Such a configuration is particularly effective in the case where inference is performed such that the values indicated by the input data to be integrated and the values indicated by the inference results are similar. In one embodiment, at least some of the statistical values (e.g., maximum value, minimum value, average value, or weighted average value) of the values indicated by the integrated input data indicate the desired inference result. For example, in one embodiment, the maximum and minimum values indicated by the defocus map in the region corresponding to the subject can indicate a desired defocus range as an inference result. The defocus range desired as this inference result can be represented by the correct answer data (e.g., the maximum or minimum value of the defocus value) of the defocus range that is used in learning.

Also, in one embodiment, the integrated feature that is generated by the feature integration unit 204 is obtained based on the element-wise product of at least some of the input data (e.g., defocus map) and the feature. In this case, no matter how the defocus value to be inferred changes, learning of the parameter that is used by the feature generation unit 203 is performed such that the feature that is generated by the feature generation unit 203 represents a portion corresponding to the subject. That is, learning can be performed such that the feature that is generated by the feature generation unit 203 shows a high value in portions of the defocus map that are highly likely to indicate the defocus amount of the subject, and shows a value close to 0 in portions where this is not the case. Such a configuration makes it easier to learn features necessary in order to obtain the defocus range of the subject. According to the present embodiment, by integrating the defocus map based on the element-wise product, the defocus range inference accuracy can be improved, compared to the case where the defocus map is integrated by combining the combination in the channel direction and the product-sum operation.

Also, in one embodiment, the post-processing unit 205 generates a processing result corresponding to the input data without using a nonlinear operation. Such a configuration makes it easier to maintain the absolute value indicated by the integrated feature in the processing by the post-processing unit 205. Thus, the post-processing unit 205 easily outputs a value that reflects the absolute value indicated by the integrated feature (i.e., value indicated by the integrated input data). Accordingly, with such an embodiment, the inference accuracy of the processing result (e.g., defocus range) is stable.

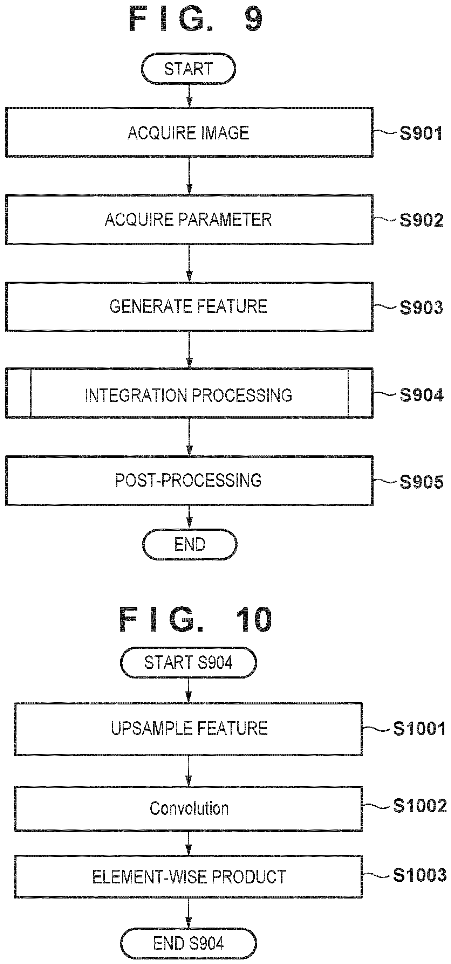

The information processing apparatus 100 according to the above-described embodiment can be used in order to perform various processing apart from estimation of the defocus range. Hereinafter, the case where the information processing apparatus 100 performs a task of reducing noise in an image will be described with reference to the flowchart in FIG. 9.

In S901, the data acquisition unit 201 acquires a captured image of a subject as input data. In S902, the parameter acquisition unit 202 acquires a parameter relating to processing similarly to S304. The parameter acquisition unit 202 is able to acquire parameters used in computations of convolutional layers (Convolution) and fully-connected layers (Fully-Connected). In S903, the feature generation unit 203 generates a feature using the captured image acquired in S901. The feature generation unit 203 is able to generate features using a CNN as shown in FIG. 4.

In S904, the feature integration unit 204 generates an integrated feature by integrating the captured image acquired in S901 and the feature generated in S903. The feature integration unit 204 generates the integrated feature using a similar technique to S306. For example, the feature integration unit 204 is able to perform processing for matching the number of elements of data to be integrated and processing for integrating the elements.

FIG. 10 is a flowchart showing an example of the processing that is performed in S904. In S1001, the feature integration unit 204 performs processing for aligning the resolution of the captured image and the resolution of the feature. For example, the feature integration unit 204 is able to perform upsampling processing on the feature. Next, in S1002, the feature integration unit 204 performs processing for aligning the number of channels of the captured image and the number of channels of the feature. For example, the feature integration unit 204 is able to perform convolution processing on the captured image. Note that the processing order of S1001 and S1002 may be swapped. Next, in S1003, the feature integration unit 204 generates an integrated feature, by calculating the element-wise product of the feature and the input image obtained after the processing of S1001 and S1002.

In S905, the post-processing unit 205 performs processing on the feature generated in S904. For example, the post-processing unit 205 is able to perform convolution processing. This convolution processing can be processing for converting the integrated feature, such that an output having the number of channels that it is ultimately desired to output (e.g., RGB 3 channels in the case of an image) is obtained. The post-processing unit 205 is thus able to obtain a noise reduction result corresponding to the captured image.

Learning the parameter that is used by the information processing apparatus 100 in such processing can be performed by the learning apparatus 13 as already described. Correct answer data indicating the noise reduction result for the captured image for learning can be obtained by any method. For example, correct answer data can be obtained, by applying noise reduction processing such as described in Chen (L. Chen et al. "Simple Baselines for Image Restoration", arXiv:2204.04676, 2022) to the captured image for learning.

Even according to the present embodiment, the integrated feature better reflects the data of the captured image than the feature obtained by processing performed on the captured image. Accordingly, with the present embodiment, the accuracy of noise reduction processing is improved. In particular, in one embodiment, the captured image and the feature are integrated using the element-wise product. In this case, learning of the parameter that is used by the feature generation unit 203 is performed, such that the feature that is generated by the feature generation unit 203 represents a ratio between the captured image and the image that is output. Thus, learning can be performed regardless of the magnitude of the value indicated by the captured image. According to such a configuration, learning is facilitated and noise reduction performance is improved.

Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

An image processing apparatus (2, 13) is provided. The apparatus acquires (S301, S302, S303, S901) input data including a captured image and/or information relating to the captured image. The apparatus acquires (S305, S903) a feature of the input data by performing processing on the input data using a neural network. The apparatus generates (S306, S904) an integrated feature by integrating the feature and at least some of the input data. The apparatus generates (S307, S905) an estimation result of at least one of a defocus range and a depth range for a subject within the captured image, by performing processing on the integrated feature.

**Claims**

1. An image processing apparatus (2, 13) comprising:

   an acquisition means (201, 1301) for acquiring input data including a captured image and/or information relating to the captured image;
   a feature acquisition means (203) for acquiring a feature of the input data by performing processing on the input data using a neural network;

an integration means (204) for generating an integrated feature by integrating the feature and at least some of the input data; and

a post-processing means (205) for generating an estimation result of at least one of a defocus range and a depth range for a subject within the captured image, by performing processing on the integrated feature.

2. The image processing apparatus according to claim 1,

wherein the integration means is further for integrating the feature and the at least some of the input data by calculating an element-wise product.

3. The image processing apparatus according to claim 1 or 2,

wherein the integration means is further for performing processing for matching a spatial resolution between the feature and the at least some of the input data, and integrating the feature and the at least some of the input data after the processing for matching.

4. The image processing apparatus according to any one of claims 1 to 3,

wherein the integration means is further for performing processing for matching a number of channels between the feature and the at least some of the input data, and integrating the feature and the at least some of the input data after the processing for matching.

5. The image processing apparatus according to any one of claims 1 to 4,

wherein the integration means is further for generating the integrated feature, by performing processing for combining the feature and the at least some of the input data in a channel direction, and performing a product-sum operation on data obtained by the processing for combining.

6. The image processing apparatus according to any one of claims 1 to 5,

wherein the integration means is further for performing noise reduction processing on the at least some of the input data, and generating the integrated feature by integrating the feature and the at least some of the input data after the noise reduction processing.

7. The image processing apparatus according to any one of claims 1 to 6,

wherein the integration means is further for performing high-resolution processing on the at least some of the input data, and generating the integrated feature by integrating the feature and the at least some of the input data obtained after the high-resolution processing.

8. The image processing apparatus according to any one of claims 1 to 7,

wherein the processing performed on the integrated feature is a linear operation.

9. The image processing apparatus according to any one of claims 1 to 8,

wherein the processing performed on the integrated feature includes processing in a fully-connected layer.

10. The image processing apparatus according to any one of claims 1 to 9,

wherein the processing performed on the integrated feature does not include a nonlinear operation.

11. The image processing apparatus according to any one of claims 1 to 10,

wherein the processing performed on the input data includes a nonlinear operation.

12. The image processing apparatus according to any one of claims 1 to 11,

wherein the processing performed on the input data is processing in a neural network including an activation layer.

13. The image processing apparatus according to any one of claims 1 to 12,

wherein a calculation amount of the processing performed on the integrated feature is less than a calculation amount of the processing performed on the input data.

14. The image processing apparatus according to any one of claims 1 to 13,

wherein the input data further includes data designating a region in which the subject is located within the captured image.

15. The image processing apparatus according to any one of claims 1 to 14,

wherein the input data includes the captured image, and

the at least some of the input data is the captured image.

16. The image processing apparatus according to any one of claims 1 to 15,

wherein the input data includes the captured image and at least one of a defocus map showing a defocus amount for each position in the captured image and a depth map showing a depth value for each position in the captured image, and
the at least some of the input data is the at least one of the defocus map and the depth map.

**17.** An image processing method comprising:

acquiring (S301, S302, S303, S901) input data including a captured image and/or information relating to the captured image;
acquiring (S305, S903) a feature of the input data by performing processing on the input data using a neural network;
generating (S306, S904) an integrated feature by integrating the feature and at least some of the input data; and
generating (S307, S905) an estimation result of at least one of a defocus range and a depth range for a subject within the captured image, by performing processing on the integrated feature.

**18.** A computer program comprising instructions which, when the program is executed by a computer, cause the computer to function as the image processing apparatus according to any one of claims 1 to 16.

EP 4 465 241 A1

# F I G. 1

# F I G. 2

# F I G. 3

```
        ┌─────────────┐
        │    START    │
        └─────────────┘
               │
               ▼
   ┌───────────────────────────┐
   │       ACQUIRE IMAGE       │──S301
   └───────────────────────────┘
               │
               ▼
   ┌───────────────────────────┐
   │    ACQUIRE DEFOCUS MAP     │──S302
   └───────────────────────────┘
               │
               ▼
   ┌───────────────────────────┐
   │ ACQUIRE SUBJECT REGION MAP │──S303
   └───────────────────────────┘
               │
               ▼
   ┌───────────────────────────┐
   │     ACQUIRE PARAMETER     │──S304
   └───────────────────────────┘
               │
               ▼
   ┌───────────────────────────┐
   │      GENERATE FEATURE     │──S305
   └───────────────────────────┘
               │
               ▼
   ┌─┬───────────────────────┬─┐
   │ │  INTEGRATION PROCESSING │ │──S306
   └─┴───────────────────────┴─┘
               │
               ▼
   ┌───────────────────────────┐
   │       POST-PROCESSING     │──S307
   └───────────────────────────┘
               │
               ▼
        ┌─────────────┐
        │     END     │
        └─────────────┘
```

# F I G. 4

INPUT

Convolution — 401

ReLU — 402

MaxPooling — 403

Convolution — 404

ReLU — 405

OUTPUT

# F I G. 5

START S306

DOWNSAMPLE DEFOCUS MAP — S501

BROADCAST DEFOCUS MAP — S502

ELEMENT-WISE PRODUCT — S503

END S306

# F I G. 6

```
                    START S306

                    UPSAMPLE FEATURE                    S601

              COMBINE IN CHANNEL DIRECTION              S602

                    Convolution                         S603

                    END S306
```

# F I G. 7

```
                    INPUT

                Global Average Pooling                  701

                  Fully Connected                       702

                    OUTPUT
```

# F I G. 8A

802   801

# F I G. 8B

804   803

# F I G. 8C

FREQUENCY

DEFOCUS
AMOUNT

DEFOCUS
RANGE

# F I G. 8D

805

# F I G.  9

```
START
   │
   ▼
┌─────────────────────────────┐
│       ACQUIRE IMAGE         │──── S901
└─────────────────────────────┘
   │
   ▼
┌─────────────────────────────┐
│      ACQUIRE PARAMETER      │──── S902
└─────────────────────────────┘
   │
   ▼
┌─────────────────────────────┐
│      GENERATE FEATURE       │──── S903
└─────────────────────────────┘
   │
   ▼
┌─────────────────────────────┐
│    INTEGRATION PROCESSING   │──── S904
└─────────────────────────────┘
   │
   ▼
┌─────────────────────────────┐
│       POST-PROCESSING       │──── S905
└─────────────────────────────┘
   │
   ▼
  END
```

# F I G.  10

```
START S904
   │
   ▼
┌─────────────────────────────┐
│      UPSAMPLE FEATURE       │──── S1001
└─────────────────────────────┘
   │
   ▼
┌─────────────────────────────┐
│        Convolution          │──── S1002
└─────────────────────────────┘
   │
   ▼
┌─────────────────────────────┐
│    ELEMENT-WISE PRODUCT     │──── S1003
└─────────────────────────────┘
   │
   ▼
  END S904
```

1101

CHANNEL DIRECTION

ELEMENT-WISE PRODUCT

1102

BROADCAST IN CHANNEL DIRECTION

1103

EP 4 465 241 A1

# FIG. 12A

1203

| 1 | 2 | 3 | 4 |
| 5 | 6 | 7 | 8 |
| 9 | 10 | 11 | 12 |
| 13 | 14 | 15 | 16 |

y DIRECTION

x DIRECTION

# FIG. 12B

1207

| 6 | 8 |
| 14 | 16 |

1206

| 5 | 7 |
| 13 | 15 |

1205

| 2 | 4 |
| 10 | 12 |

1204

| 1 | 3 |
| 9 | 11 |

CHANNEL DIRECTION

y DIRECTION

x DIRECTION

# F I G. 13

13

- DATA ACQUISITION UNIT — 1301
- 21
  - FEATURE GENERATION UNIT — 203
  - FEATURE INTEGRATION UNIT — 204
  - POST-PROCESSING UNIT — 205
- LOSS CALCULATION UNIT — 1302
- PARAMETER UPDATE UNIT — 1303
- PARAMETER SAVING UNIT — 1304

206

STORAGE UNIT

# FIG. 14

START

ACQUIRE IMAGE ～S301

ACQUIRE DEFOCUS MAP ～S302

ACQUIRE SUBJECT REGION MAP ～S303

ACQUIRE CORRECT ANSWER DATA ～S1401

GENERATE FEATURE ～S305

INTEGRATION PROCESSING ～S306

POST-PROCESSING ～S307

CALCULATE LOSS ～S1402

UPDATE PARAMETER ～S1403

SAVE PARAMETER ～S1404

END

Europäisches
Patentamt

European
Patent Office

Office européen
des brevets

**EUROPEAN SEARCH REPORT**

Application Number

EP 24 16 9169

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HERRMANN CHARLES ET AL: "Learning to Autofocus", 2020 IEEE/CVF CONFERENCE ON COMPUTER VISION AND PATTERN RECOGNITION (CVPR), IEEE, 13 June 2020 (2020-06-13), pages 2227-2236, XP033803361, DOI: 10.1109/CVPR42600.2020.00230 [retrieved on 2020-08-03] | 1,4,6, 8-18 | INV. G06T7/55 G03B13/36 H04N23/67 |
| Y | * Section 1, 6; Figure 7 * | 3,6,7,9 | |
| A | | 2,5 | |
| Y | US 2023/073357 A1 (TSUNODA TAKAMASA [JP]) 9 March 2023 (2023-03-09) * Paragraphs 0033, 0064, 0077 * | 3,7,9 | |
| Y | CHENGYU WANG ET AL: "Intelligent Autofocus", ARXIV.ORG, CORNELL UNIVERSITY LIBRARY, 201 OLIN LIBRARY CORNELL UNIVERSITY ITHACA, NY 14853, 27 February 2020 (2020-02-27), XP081609999, * Section 5.1 * | 6 | |
| | | | TECHNICAL FIELDS SEARCHED (IPC) |
| A | ABUOLAIM ABDULLAH ET AL: "Defocus Deblurring Using Dual-Pixel Data" In: "In Computer Vision ECCV 2020", 23 August 2020 (2020-08-23), SPRINGER, PAGE(S) 111 - 126, XP047568707, * Section 5 * | 1-18 | G06T H04N G03D G03B |

The present search report has been drawn up for all claims

| Place of search | Date of completion of the search | Examiner |
|---|---|---|
| The Hague | 7 October 2024 | Thean, Andrew |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 4 465 241 A1

## ANNEX TO THE EUROPEAN SEARCH REPORT
## ON EUROPEAN PATENT APPLICATION NO.

EP 24 16 9169

This annex lists the patent family members relating to the patent documents cited in the above-mentioned European search report.
The members are as contained in the European Patent Office EDP file on
The European Patent Office is in no way liable for these particulars which are merely given for the purpose of information.

07-10-2024

| Patent document cited in search report | Publication date | Patent family member(s) | Publication date |
|---|---|---|---|
| US 2023073357 A1 | 09-03-2023 | JP 2023038128 A<br>US 2023073357 A1 | 16-03-2023<br>09-03-2023 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022137760 A
- JP 2019134431 A
- JP 2017098900 A

**Non-patent literature cited in the description**

- **W. LIU et al.** SSD: Single Shot MultiBox Detector. *ECCV,* 2016
- **W. YANG et al.** Deep Learning for Single Image Super-Resolution: A Brief Review. *arXiv: 1808.03344,* 2018
- **L. CHEN et al.** Simple Baselines for Image Restoration. *arXiv:2204.04676,* 2022